(19) Europäisches Patentamt
European Patent Office
Office européen des brevets

(11) **EP 3 314 285 B1**

(12) **FASCICULE DE BREVET EUROPEEN**

(45) Date de publication et mention
de la délivrance du brevet:
**14.08.2024 Bulletin 2024/33**

(21) Numéro de dépôt: **16730420.3**

(22) Date de dépôt: **21.06.2016**

(51) Classification Internationale des Brevets (IPC):
**G01S 1/20** *(2006.01)*    **G01S 5/10** *(2006.01)*

(52) Classification Coopérative des Brevets (CPC):
**G01S 1/20; G01S 5/10**

(86) Numéro de dépôt international:
**PCT/EP2016/064321**

(87) Numéro de publication internationale:
**WO 2016/207168 (29.12.2016 Gazette 2016/52)**

(54) **PROCEDE DE LOCALISATION D'UN RECEPTEUR AU SEIN D'UN SYSTEME DE POSITIONNEMENT**

VERFAHREN ZUR LOKALISIERUNG EINES EMPFÄNGERS IN EINEM POSITIONIERUNGSSYSTEM

METHOD FOR LOCATING A RECEIVER WITHIN A POSITIONING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2015 FR 1555805**

(43) Date de publication de la demande:
**02.05.2018 Bulletin 2018/18**

(73) Titulaire: **Institut Mines-Telecom**
**75014 Paris (FR)**

(72) Inventeurs:
• **VERVISCH-PICOIS, Alexandre**
**37000 Tours (FR)**
• **SAMAMA, Nel**
**94100 Saint-maur Des Fosses (FR)**

(74) Mandataire: **Cabinet Nony**
**11 rue Saint-Georges**
**75009 Paris (FR)**

(56) Documents cités:
**US-A1- 2002 145 563     US-A1- 2007 052 583**
**US-A1- 2009 322 603**

• **ALEXANDRE VERVISCH-PICOIS ET AL: "Delta Carrier Range algorithm for indoor positioning application to pseudolite-like transmitters", 2016 INTERNATIONAL CONFERENCE ON INDOOR POSITIONING AND INDOOR NAVIGATION (IPIN), IEEE, 4 October 2016 (2016-10-04), pages 1 - 8, XP033005662, DOI: 10.1109/IPIN.2016.7743669**

# EP 3 314 285 B1

## Description

La présente invention a pour objet un procédé de localisation d'au moins un récepteur au sein d'un système de positionnement ainsi qu'un tel système de positionnement.

L'invention s'applique plus particulièrement à des systèmes utilisant le multiplexage par le code, encore appelés en anglais « *code division multiple access* » (CDMA), ce qui est par exemple le cas du GPS (« *global positioning system* » en anglais) et du GNSS (« *global navigation satellite system* » en anglais). Ces systèmes mettent en oeuvre des émetteurs émettant un signal comprenant une porteuse modulée par un code.

Les systèmes de positionnement connus reposent, pour la très grande majorité d'entre eux, sur une approche de triangulation ou de multilatération afin de définir, dans un repère global ou local, les coordonnées d'un terminal mobile, appelé récepteur.

D'autres approches reposent quant à elle sur un ensemble de mesures en coordonnées polaires afin d'obtenir les coordonnées du terminal cible.

Ces approches sont mises en oeuvre au niveau du terminal, ou à un niveau plus général, tel qu'un serveur distant avec lequel communique le terminal, ou à la fois sur le terminal et sur le serveur. Les mesures conduisent à des distances ou à des angles.

Les systèmes de positionnement connus sont efficaces en milieu extérieur, à ciel ouvert, milieu dit « *outdoor* » en anglais, mais leurs performances se dégradent en milieu intérieur, dit « *indoor* » en anglais ou lorsque le ciel est obstrué par des immeubles ou obstacles hauts. De surcroît, le niveau de précision requis en intérieur est supérieur à celui requis en extérieur, l'environnement étant plus petit et plus dense en informations en intérieur.

Il est en outre important d'assurer la continuité de positionnement entre les milieux extérieur et intérieur.

Les réseaux de capteurs offrent des performances excellentes mais leur infrastructure présente une très forte contrainte. Les capteurs employés sont les capteurs à ultrasons, infrarouge, de pression ou encore des étiquettes électroniques. Ces dernières, notamment du type « Near Field Communication » (NFC), sont de plus en plus utilisées, mais ne permettent pas un positionnement continu, ni dans le temps ni dans l'espace.

Les techniques utilisant les réseaux de télécommunication mobiles, tels que GSM, UMTS, ou de quatrième génération dits « 4G », ou locaux, tels que Bluetooth, Bluetooth Low Energy (BLE), Wi-Fi ou Ultra Large Band (ULB), nécessitent une infrastructure pouvant être déployée par ailleurs, pour des besoins autres que la localisation. Il est cependant nécessaire de mettre en oeuvre également des moyens spécifiques à la localisation. Une approche fondée sur l'identification de cellule dans le cas de réseaux mobiles, appelée « *Cell Id* » en anglais, a été développée pour les balises locales, évitant le recours aux diverses phases de calibration souvent requises. Cette technique est peu précise.

Des approches dites de « *positionnement symbolique* » ont été développées, comme décrit dans l'article de Magda Chelly et Nel Samama, « WiFi Indoor Symbolic Positioning System Implemented On a PDA », GNSS 2007, fondées sur une solution hybride utilisant l'identification de cellule dans les réseaux mobiles et les signaux GNSS, et proposant un positionnement continu, peu précis et fiable à ce jour.

Des systèmes inertiels sont également utilisés, mettant en oeuvre une infrastructure réduite mais un terminal mobile complexe et une modélisation non triviale. Ces capteurs sont intégrés dans certains téléphones intelligents actuels, « *smartphones* » en anglais.

Les approches utilisant des capteurs détournent ces derniers de leur utilisation naturelle pour réaliser une fonction de localisation.

Les systèmes utilisant l'analyse des variations locales du champ magnétique permettent de bonnes performances, mais ne sont pas encore prêts techniquement pour être intégrés dans des smartphones. Des approches similaires reposent sur l'utilisation de balises magnétiques, et se rapprochent des techniques de type « *empreintes* » ou « *fingerprinting* » en anglais, couramment utilisées par les réseaux locaux de télécommunications.

Des systèmes optiques sont également connus, utilisant des caméras intégrées aux smartphones, mais conduisant à une complexité de calcul importante pour les processeurs de ces derniers. Les systèmes de reconnaissance d'images sont performants mais n'assurent pas une totale continuité : des contraintes de mise en oeuvre persistent, ces systèmes requérant une action consciente de l'utilisateur pour effectuer la prise de vue, et nécessitant une image non floue, ce qui limite le mouvement du terminal mobile durant la prise de vue.

La technique dite « *Li-Fi* », pour « *Light Fidelity* » en anglais, émerge également. Cette approche s'apparente à la technique « Cell-Id » mentionnée plus haut, mais utilise les détecteurs de luminosité des smartphones, codant chaque luminaire en fonction de sa position par l'intermédiaire d'une modulation de la lumière, le smartphone décodant cette modulation pour déterminer sa position. L'ergonomie d'usage d'une telle approche n'est pas optimale.

Les systèmes de type radar reposent sur des mesures de temps de parcours aller-retour d'une onde, permettant d'obtenir une distance, et sur des mesures de direction d'arrivée en coordonnées sphériques. Ces systèmes représentent une simplification plutôt élevée des contraintes habituelles d'un système de positionnement, à savoir la synchronisation entre les parties en présence et la diversité spatiale nécessaire. Un unique émetteur est suffisant pour déterminer une position. Néanmoins des terminaux mobiles dédiés sont nécessaires. Certaines approches utilisent des antennes doubles espacées d'une longueur d'onde du signal, et mesurent la différence de phases des signaux reçus des deux antennes pour définir l'angle d'arrivée du signal émis.

Des solutions utilisant les signaux GNSS ont été développées, notamment A-GPS pour *« Assisted GPS »* en anglais, et HSGNSS pour *« High Sensibility GNSS »* en anglais, offrant une amélioration des performances en positionnement dans des environnements auparavant non couverts par des satellites, et pouvant être mises en oeuvre sans infrastructure dédiée. Ces solutions sont néanmoins limitées en termes de détection, de précision et de temps nécessaire à l'obtention d'une position.

Il est connu du brevet US 5 899 957 de corriger des signaux GPS porteurs de phase à une position arbitraire en utilisant des mesures de phase reçues de différentes stations GPS de base dont la position est connue, pour améliorer l'efficacité du positionnement.

Le brevet US 4 646 096 décrit un procédé utilisant le principe du mouvement de la constellation de satellites autour d'un récepteur en mesurant et stockant les variations de phase des porteuses correspondant aux signaux provenant desdits satellites, afin de déterminer l'ambiguïté entière des mesures du code des signaux correspondants pour des récepteurs monocanal.

Il est connu, notamment du brevet US 7 212 155, d'utiliser des mesures de variation de la phase de porteuses de signaux provenant de satellites, sans utiliser de station de base, pour corriger progressivement une position hypothétique de départ d'un récepteur en mouvement.

Il est connu des brevets US 7 671 794 et US 6 549 165 des systèmes de positionnement utilisant des mesures de différence de phase réalisées soit sur deux antennes distinctes en réception, soit entre deux signaux émis à des fréquences différentes.

La demande WO 2014/060777 décrit le positionnement d'un terminal mobile, utilisant un signal envoyé par ledit terminal et reçu par des antennes multiples de points d'accès multiples sans fil, et se fondant sur des calculs de différences de phase entre les différentes antennes pour obtenir un angle d'arrivée du signal sur les antennes.

US 2007/0052583 divulgue un système pour déterminer la position relative d'un récepteur mobile par rapport à sa position initiale, lequel récepteur reçoit des signaux émis par une pluralité de satellites. La position du récepteur par rapport à sa position initiale est déterminée par incrément de phases des porteuses des signaux émis par ces satellites durant le déplacement du récepteur.

US 2002/0145563 décrit un système pour déterminer le mouvement d'un corps humain, comportant des antennes émettrices fixées sur le corps humain et des antennes réceptrices installées dans un espace où les mesures seront prises.

US 2009/0322603 divulgue un système de positionnement comportant une station réceptrice qui reçoit des signaux provenant des stations émettrices et extrait des porteuses de ces signaux des signaux pilotes. Ces signaux sont ensuite traités et reçus par des unités mobiles pour déterminer les positions de ces unités.

La plupart des méthodes précédemment décrites nécessitent de coupler ou fusionner plusieurs techniques et/ou technologies afin de parvenir à la continuité de positionnement entre les milieux extérieur et intérieur.

Les approches connues à base de répélites mettent à profit les récepteurs et les signaux GNSS transmis, afin de permettre à un unique récepteur GNSS, présent dans le terminal mobile, d'assurer une fonction de localisation.

Ces approches utilisent le concept de pseudo-satellites, ou *« pseudolites »,* c'est-à-dire un réseau d'émetteurs terrestres transmettant des signaux de même structure que les signaux envoyés par un satellite, comme décrit dans l'article de Kee C. et al. "Centimeter-Accuracy Indoor Navigation Using GPS-Like Pseudolites", GPS World 2001, pages 14-20. Les mesures les plus précises des signaux GNSS, qui permettent en particulier un positionnement centimétrique dans de bonnes conditions de réception en extérieur, sont utilisées dans ces approches, offrant des performances expérimentales de grande qualité, et étant fiables et simples à utiliser. Elles permettront à court terme de réduire le nombre d'émetteurs nécessaires et de simplifier la gestion du système, notamment en supprimant la synchronisation ou en utilisant des émetteurs bas coût. Les signaux élaborés dans le cadre du projet européen de système de positionnement par satellites *« Galileo »* permettent une réduction importante des niveaux d'interférence, laissant à penser qu'il sera possible de conserver les bandes utilisés par les signaux GNSS pour assurer la continuité complète de la fonction de localisation.

La géolocalisation utilisant des pseudolites calcule des intersections géométriques de sphères centrées en des points connus, les positions des pseudolites, en utilisant le temps de propagation des signaux pour mesurer les rayons des sphères, comme décrit dans le chapitre 2 du livre de Kaplan E. et Hegarty C. "Understanding GPS Principles and Applications", Artech House, 2006, 2nde édition. Le temps de propagation d'un signal peut être mesuré grâce au code ou à la porteuse du signal. Cependant, le phénomène de chemins multiples, dit *« multipath »* en anglais, affecte fortement les temps de mesure en extérieur, et encore plus en intérieur, à cause de la présence de nombreux obstacles, comme décrit dans le chapitre 6 du livre susmentionné et dans l'article de Fluerasu A. et al. "Multipath modélisation of typical indoor environments optimisation of GNSS based indoor positioning", ENC-GNSS 2008. Il a été démontré qu'il est difficile d'obtenir des mesures précises à plus de 2 ou 3 mètres en utilisant uniquement des mesures de code, dans les articles de Jardak N. et Samama N. "Short Multipath Insensitive Code Loop Discriminator", IEEE Transactions on Aerospace and Electronic Systems 2010, vol 46, pages 278-295, de Vervisch-Picois A. et al. "2D Indoor Dynamic Positioning Using GNSS Based Repeaters", ION GNSS 2006, et de Jee G. I. et al. " Indoor Positioning Using Time Synchronised Switching GPS Repeater", ION GNSS 2005.

Les mesures de la phase de la porteuse ont l'avantage d'être moins sensibles au problème de chemins multiples, et permettent une précision de quelques dizaines de centimètres, comme présenté dans les articles de Rizos C. et al. "LocataNet: Intelligent Time-Synchronised Pseudolite Transceivers for cm-Level Stand-Alone Positioning", IAIN World Congress 2003, et de I. Selmi et al. "Experimental Positioning Results of the Repealite Based Indoor Positioning System", IEEE International Conférence on Indoor Positioning and Indoor Navigation 2012.

Cependant, il est difficile de réaliser un positionnement absolu avant de connaître l'ambiguïté de la phase de la porteuse issue de chaque pseudolite. Cette ambiguïté $N_k$ correspond au résultat de la division euclidienne de la distance de propagation par la longueur d'onde de la porteuse : $D_{PLk} = \phi_k + \lambda.N_k$, avec $D_{PLK}$ la distance entre le récepteur et le pseudolite PLk, $\phi_k$ la valeur de la phase de la porteuse, et $\lambda$ la longueur d'onde, par exemple égale à 0,19 m pour le signal L1 GPS.

Pour résoudre ce problème en intérieur, des méthodes utilisant les principes liés au milieu extérieur sont connues, décrites dans les articles de Kee C. et al. "Development of indoor Navigation System using asynchronous pseudolites", ION GPS 2000, de Xiaoguang Wan et al. "The Pseudolite-based Indoor Navigation System Using Ambiguity Resolution On The Fly", IEEE 3rd International Symposium on Systems and Control in Aeronautic and Astronautics 2010, pages 212-217, et de Puengnim A. et al. "Précisé Positioning for Virtually Synchronized Pseudolite System", IEEE International Conférence on Indoor Positioning and Indoor Navigation 2013, pages 1-8. Néanmoins, l'hypothèse de linéarité du milieu extérieur n'étant pas valable en intérieur, la méthode décrite par Kee et al. repose sur une version non linéaire de l'algorithme de positionnement décrit dans le chapitre 2 du livre susmentionné, conduisant à une convergence de l'algorithme non garantie dans certaines situations. Les méthodes décrites dans les articles de Xiaoguang Wan et al. et Puengnim A. et al. reposent sur l'utilisation de filtres de Kalman étendus, la première mettant en oeuvre des mesures du code des signaux et l'approche « Least square AMBiguity Adjustement » (LAMBDA) avec une position initiale statique, et la deuxième utilisant le mouvement du récepteur pour linéariser le problème.

Les approches décrites dans les articles de Petrovski I. et al. "Précisé Navigation Indoor", IEEE SICE Annual Conférence 2004, vol 2, pages 1739-1744, et de Kao Wei-Wen et Tsai Chin-Lang, "Carrier Phase Indoor Positioning using Pseudolites And INS" ION GNSS 2003, se fondent sur le même principe mais en utilisant le mouvement, de la station de base dans le premier cas, ou du récepteur, à l'aide d'un capteur inertiel dans le deuxième cas.

D'autres approches utilisant uniquement des mesures Doppler sont connues, notamment décrites dans l'article de Schelkshom S. et Detlefsen J. "Indoor Navigation Based On Doppler Measurements", IEEE Workshop on Positioning, Navigation and Communication 2007, pages 37-40. Cet article présente une approche effectuant simultanément des mesures Doppler d'un objet en mouvement à localiser par quatre capteurs situés à différentes positions. L'article de Sakamoto Y. et al. "Doppler Positioning with a Movable Receiver Antenna and a Single Pseudolite for Indoor Localization", IEEE/ASME International Conférence on Advanced Intelligent Mechatronics 2011, pages 19-24, présente une méthode de positionnement par Doppler uniquement appliquée à un robot ayant une antenne rotative.

Il existe un besoin pour obtenir une localisation précise au sein d'un système de positionnement, permettant la continuité entre les milieux intérieur et extérieur, et mettant en oeuvre une infrastructure peu complexe et compatible avec l'ensemble des terminaux mobiles actuels.

L'invention a pour but de répondre à ce besoin et elle y parvient, selon l'un de ses aspects, grâce à un procédé de localisation d'au moins un récepteur au sein d'un système de positionnement selon la revendication 1.

La méthode selon l'invention s'affranchit, lors des mesures, de la connaissance de la valeur absolue de la distance séparant l'émetteur du récepteur. On obtient ainsi un positionnement absolu, grâce au mouvement du récepteur et à partir de mesures relatives des variations de phase de la porteuse, fournissant des résultats proches de ceux d'un Doppler intégré.

Les mesures de variation de distances entre les émetteurs et le récepteur sont possibles, avec une précision élevée, par exemple décimétrique ou centimétrique, par des mesures de la phase de la porteuse de signaux radio, notamment de type GNSS. Ces mesures traduisent la vitesse de déplacement radiale relative entre les émetteurs, qui sont fixes selon l'invention, et le récepteur. La méthode de localisation selon l'invention a une sensibilité moins grande aux perturbations dues à la propagation des signaux.

L'invention ne nécessite qu'une infrastructure réduite, notamment un nombre réduit d'émetteurs, indépendants les uns des autres, et ne nécessitant pas d'être synchronisés entre eux.

L'invention permet la continuité du positionnement entre les milieux extérieurs et intérieurs.

Le procédé selon l'invention prend en compte le fait que, en fonction de l'endroit où l'on se déplace, les distances entre les émetteurs et le récepteur varient différemment.

Une fois que la position initiale du récepteur est déterminée, un positionnement selon les méthodes connues peut être réalisé.

L'invention peut être mise en oeuvre avec tous les récepteurs de terminaux mobiles actuels, notamment de téléphones portables.

Le procédé peut être mis en oeuvre en intérieur (en *indoor*), servant par exemple pour le positionnement d'objets dans des zones non couvertes par le GPS ou le GNSS, par exemple des bâtiments.

Le procédé selon l'invention se fonde avantageusement sur la génération de signaux de type GNSS transmis par voie radio, par exemple sur des fréquences RNSS, *« Radio Navigation Satellite Services »* en anglais, susceptibles d'être traités par des récepteurs GNSS, au moins en ce qui concerne leur traitement numérique.

La fréquence des signaux émis par les émetteurs peut être quelconque, mais est de préférence égale à 1,575 GHz, les signaux étant par exemple de type GNSS Galileo.

Le terme *« émetteur »* peut se substituer au terme *« générateur »*, et vice-versa.

## Pseudo-distance

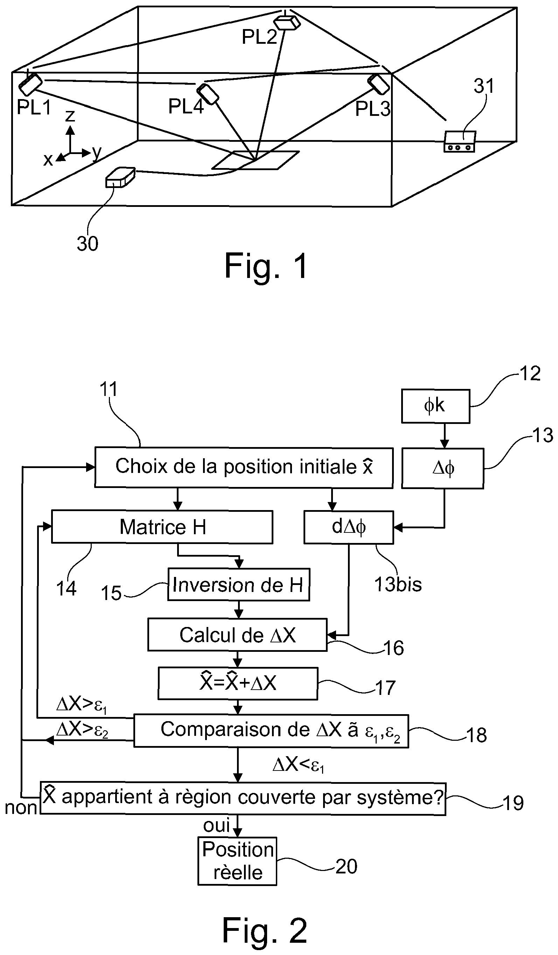

Comme évoqué précédemment, et comme représenté à la figure 1, un pseudolite PL1, PL2, PL3, PL4 est un émetteur synchronisé sur un système global 31 de temps de référence, commun à l'ensemble de la constellation. On peut mesurer la pseudo-distance $PR_k(t)$ d'un pseudolite PLk à un instant t, ou *« pseudorange »* en anglais, correspondant à une mesure indirecte de distance par le repérage de l'instant de réception d'un signal provenant du pseudolite et daté à l'émission, lorsque les horloges du pseudolite et du récepteur 30 ne sont pas synchronisées. Cette mesure peut s'exprimer par :

$$\sqrt{(x(t)-x_{plk})^2 + (y(t)-y_{plk})^2 + (z(t)-z_{plk})^2} + c.b(t) = PR_k(t),$$

avec (x(t), y(t), z(t)) les coordonnées du récepteur à l'instant t, ($x_{plk}$, $y_{plk}$, $z_{plk}$) les coordonnées du pseudolite PLk, supposées connues, c la vitesse de la lumière et b(t) le biais d'horloge entre le temps de référence de la constellation et l'horloge du récepteur à l'instant t. Il est à noter que la hauteur z est considérée comme connue dans le cas d'un positionnement en deux dimensions.

La pseudo-distance peut être mesurée en utilisant le délai du code ou la phase de la porteuse du signal entrant. Dans le cas où la phase est utilisée, l'expression devient :

$$\sqrt{(x(t)-x_{plk})^2 + (y(t)-y_{plk})^2 + (z(t)-z_{plk})^2} + c.b(t) = \phi_k(t) + \lambda.N_k,$$

avec $\phi_k$ la phase de la porteuse dépendant du temps t, $\lambda$ la longueur d'onde et $N_k$ l'ambiguïté de la phase introduite précédemment, ne dépendant pas du temps.

## Variations de la distance récepteur-émetteurs

Comme l'ambiguïté de la phase ne dépend pas du temps, il est avantageux, pour l'éliminer, de mesurer la pseudo-distance d'un émetteur selon l'invention à deux moments successifs $t_1$ et $t_2$ et de soustraire les équations obtenues :

$$\sqrt{(x(t_2)-x_{plk})^2 + (y(t_2)-y_{plk})^2 + (z(t_2)-z_{plk})^2}$$
$$-\sqrt{(x(t_1)-x_{plk})^2 + (y(t_1)-y_{plk})^2 + (z(t_1)-z_{plk})^2}$$
$$+c.(b(t_2)-b(t_1))$$
$$=\phi_k(t_2)-\phi_k(t_1)$$

Dans un souci de simplicité, dans la suite, un positionnement en deux dimensions sera considéré, et les inconnues x($t_1$), y($t_1$), x(tz), y($t_2$) et b($t_2$)-b($t_1$) seront notées respectivement $x_1$, $y_1$, $x_2$, $y_2$ et $\Delta b_{12}$, et la phase $\phi_k(t_j)$ sera notée $\phi_k^j$.

Au moins un troisième instant $t_3$ peut être considéré, correspondant à une position du récepteur $x_3$, $y_3$ et à un

biais d'horloge b(t$_3$), pour obtenir une nouvelle mesure et augmenter le nombre d'équations.

Le nombre d'émetteurs n$_{pl}$ est avantageusement fonction de la dimension m du positionnement et du nombre de mesures k$_{pt}$ réalisées pour des positions différentes du récepteur :

$$m.(1 + \frac{1}{k_{pt}}) \leq n_{pl}.$$

Cette relation permet de connaître le nombre minimum d'émetteurs nécessaires pour la bonne mise en oeuvre du procédé selon l'invention.

La dimension m du positionnement peut être égale à deux ou trois, correspondant respectivement à un positionnement en deux ou en trois dimensions.

Dans le cas d'un nombre limité d'émetteurs, notamment deux émetteurs, des indications supplémentaires peuvent faciliter la détermination de la position initiale du récepteur, par exemple une observation de la zone de l'environnement dans lequel évolue le récepteur et de sa trajectoire, permettant de discriminer certaines symétries, et/ou de déterminer si la trajectoire du récepteur coupe ou non la droite passant par les deux émetteurs.

Le procédé selon l'invention permet de s'adapter aux conditions requises et disponibles : un nombre plus élevé d'émetteurs peut être utilisé si peu de mesures de la phase doivent être réalisées, par exemple pour obtenir rapidement la position du récepteur, ou, au contraire, un plus faible nombre d'émetteurs peut être utilisé si une infrastructure réduite est souhaitée, un nombre plus élevé de mesures de la phase étant alors réalisé. La longueur du déplacement du récepteur entre deux positions est également à déterminer, selon la géométrie de la région couverte par le système de positionnement.

Le système d'équations obtenues selon le nombre de mesures effectuées peut être linéarisé et résolu itérativement par l'algorithme de Newton ou par l'algorithme des moindres carrés, appelé « *Least-Square* » en anglais.

On peut calculer la variation de la phase de la porteuse entre une position ultérieure (x$_j$, y$_j$, z$_j$) et la position initiale estimée prédéfinie (x$_1$, y$_1$, z$_1$) du récepteur, correspondant à l'instant t$_1$ et à l'instant ultérieur t$_j$, par la relation :

$$\sqrt{(x_j - x_{plk})^2 + (y_j - y_{plk})^2 + (z - z_{plk})^2}$$
$$- \sqrt{(x_1 - x_{plk})^2 + (y_1 - y_{plk})^2 + (z - z_{plk})^2}$$
$$+ c.\Delta b_{1j}$$
$$= \phi_k^j - \phi_k^1$$

On peut utiliser une série de Taylor du premier ordre pour calculer la variation de la phase de la porteuse :

$$-a_{x_k}^1 dx_1 - a_{y_k}^1 dy_1 + a_{x_k}^j dx_j + a_{y_k}^j dy_j + c.\,d\Delta b_{1j} = \phi_k^j - \phi_k^1 - (\hat{\rho}_k^j - \hat{\rho}_k^1),$$

avec

$$\hat{\rho}_k^u = \sqrt{(x_u - x_{plk})^2 + (y_u - y_{plk})^2 + (z - z_{plk})^2} + c.\,b(t_u),$$

$$a^u_{x_k} = -\frac{(x_{plk}-\hat{x}_u)}{\sqrt{(\hat{x}_u-x_{plk})^2+(\hat{y}_u-y_{plk})^2+(z-z_{plk})^2}}, \text{ et } a^u_{y_k} =$$

$$-\frac{(y_{plk}-\hat{y}_u)}{\sqrt{(\hat{x}_u-x_{plk})^2+(\hat{y}_u-y_{plk})^2+(z-z_{plk})^2}}.$$

Les valeurs $dx_1$, $dy_1$, $dx_j$, $dy_j$ et $d\Delta b1_j$, correspondant à la variation de distance entre la position initiale estimée et la position initiale réelle du récepteur, sont avantageusement déterminées à chaque itération de l'algorithme.

Un produit de matrices est avantageusement utilisé pour calculer la variation de distance $\Delta X$: $H . \Delta X = d\Delta\phi$, avec

$$H = \begin{bmatrix} -A_1 & A_2 & 0 & 0 & \cdots & \cdots & 0 \\ -A_1 & 0 & A_3 & 0 & \ddots & \cdots & \vdots \\ \vdots & \vdots & \ddots & \ddots & \ddots & \ddots & 0 \\ -A_1 & 0 & \cdots & 0 & A_i & 0 & \vdots \\ \vdots & \vdots & \ddots & \ddots & \ddots & \ddots & 0 \\ -A_1 & 0 & \cdots & 0 & \cdots & 0 & A_{k_{pt}} \end{bmatrix},$$

$$A_1 = \begin{bmatrix} a^1_{x_1} & a^1_{y_1} \\ \vdots & \vdots \\ a^1_{x_{n_{pl}}} & a^1_{y_{n_{pl}}} \end{bmatrix} \text{ pour } j = 1, A_j = \begin{bmatrix} a^j_{x_1} & a^j_{y_1} & 1 \\ \vdots & \vdots & \vdots \\ a^j_{x_{n_{pl}}} & a^j_{y_{n_{pl}}} & 1 \end{bmatrix}$$

pour $j > 1$, et

$$\Delta X = \begin{bmatrix} dx_1 \\ dy_1 \\ dx_2 \\ dy_2 \\ c.d\Delta b_{12} \\ \vdots \\ dx_i \\ dy_i \\ c.d\Delta b_{1i} \\ \vdots \\ dx_{k_{pt}} \\ dy_{k_{pt}} \\ c.d\Delta b_{1k_{pt}} \end{bmatrix}, d\Delta\phi = \begin{bmatrix} \phi^2_1 - \phi^1_1 - (\hat{\rho}^2_1 - \hat{\rho}^1_1) \\ \vdots \\ \phi^2_{n_{pl}} - \phi^1_{n_{pl}} - (\hat{\rho}^2_{n_{pl}} - \hat{\rho}^1_{n_{pl}}) \\ \phi^3_1 - \phi^1_1 - (\hat{\rho}^3_1 - \hat{\rho}^1_1) \\ \vdots \\ \phi^3_{n_{pl}} - \phi^1_{n_{pl}} - (\hat{\rho}^3_{n_{pl}} - \hat{\rho}^1_{n_{pl}}) \\ \vdots \\ \vdots \\ \phi^{k_{pt}}_1 - \phi^1_1 - (\hat{\rho}^{k_{pt}}_1 - \hat{\rho}^1_1) \\ \vdots \\ \phi^{k_{pt}}_{n_{pl}} - \phi^1_{n_{pl}} - (\hat{\rho}^{k_{pt}}_{n_{pl}} - \hat{\rho}^1_{n_{pl}}) \end{bmatrix}.$$

La matrice H peut être inversée pour obtenir la matrice de variations de distance $\Delta X = d\Delta\phi . H^{-1}$.

Le procédé selon l'invention est de préférence réitéré tant que la variation de distance calculée est supérieure à un premier seuil prédéfini.

Le choix de la position initiale estimée du récepteur est fondamental pour la convergence de l'algorithme. Le procédé selon l'invention comporte avantageusement une étape dans laquelle, si la variation de distance est supérieure à un deuxième seuil prédéfini, on modifie la position initiale estimée prédéfinie du récepteur. Les mesures de phase peuvent être réitérées à partir de cette nouvelle position initiale estimée.

Lorsque la variation de distance est inférieure au premier seuil prédéfini, on vérifie si la position initiale du récepteur ainsi déterminée appartient à la région couverte par le système de positionnement, délimitée par les positions des émetteurs.

Si la position initiale du récepteur déterminée appartient à la région couverte par le système de positionnement, la position initiale estimée du récepteur est avantageusement retenue comme position réelle, sinon, on peut réitérer le procédé selon l'invention.

## Système de positionnement

L'invention a encore pour objet, selon un autre de ses aspects, un système de positionnement selon la revendication 12.

Chaque émetteur émet avantageusement sur une fréquence différente. Cela permet d'éliminer le problème du phénomène d'éblouissement ou d'interférence intrinsèque entre deux signaux émettant sur une même fréquence.

## Récepteur

L'invention a encore pour objet, selon un autre de ses aspects, un récepteur selon la revendication 13 et destiné à être utilisé au sein d'un système de positionnement comprenant au moins deux émetteurs.

Le récepteur comporte avantageusement une boucle à verrouillage de phase configurée pour mesurer la phase $\phi_k$ de la porteuse des signaux émis par les émetteurs.

Le récepteur est avantageusement multicanal.

On peut utiliser comme récepteur un récepteur standard, GNSS par exemple, aucune modification d'un tel récepteur n'étant nécessaire pour mettre en oeuvre le procédé selon l'invention.

## Grandeur géométrique représentative de la position du récepteur

En variante ou en combinaison, l'invention a encore pour objet un procédé de localisation d'au moins un récepteur au sein d'un système de positionnement, le système comprenant :

- au moins deux générateurs, chaque générateur émettant sur une même porteuse au moins deux signaux ayant chacun un code différent, et
- un récepteur configuré pour détecter les signaux émis par les générateurs, procédé dans lequel :
- le récepteur mesure, pour chacun des générateurs, la différence de phase entre les deux signaux émis par le générateur, et
- en fonction de ces mesures de différence de phase, on calcule au moins une grandeur géométrique représentative de la position du récepteur par rapport aux générateurs, afin de localiser le récepteur au sein du système de positionnement.

Les mesures sont faites pour une seule position du récepteur, qui n'a ainsi pas besoin d'être mobile dans l'environnement.

La méthode selon l'invention s'affranchit, lors des mesures, de la connaissance de la valeur absolue de la distance séparant le générateur du récepteur. L'invention produit des mesures instantanées non ambiguës permettant d'obtenir un positionnement absolu.

Les mesures des grandeurs géométriques représentatives de la position du récepteur par rapport aux générateurs sont possibles, avec une précision élevée, par exemple décimétrique ou centimétrique, par des mesures de différence de phase de signaux radio, notamment de type GNSS.

En fonction du signe des différences de phase mesurées, les symétries potentielles sont éliminées et un unique point est obtenu.

L'utilisation de générateurs à deux codes permet d'utiliser un récepteur n'ayant qu'une antenne, correspondant à un « *radar inversé* ».

Les deux signaux émis par chaque générateur sont de préférence émis à partir de deux zones d'émission du générateur distantes l'une de l'autre d'une distance prédéfinie $d_{12}$.

Les deux signaux émis par chaque générateur sont avantageusement émis à la même fréquence.

Dans un mode de réalisation, la grandeur géométrique représentative de la position du récepteur par rapport à un générateur est l'angle d'arrivée $\alpha$ des signaux émis par le générateur j sur le récepteur, fonction de la distance prédéfinie $d_{12}$ entre les deux zones d'émission du générateur et des mesures de différence de phase $\delta\varphi^j$, et défini par :

$$\alpha_j = Arc\cos\left(\frac{\delta\varphi^j}{d_{12}^{\ j}}\right).$$

L'angle est avantageusement pris dans le plan défini par les deux zones d'émission du générateur et le récepteur. On considère que l'angle au milieu des deux zones d'émission est identique aux angles issus directement de chaque zone vers le récepteur, ce qui est le cas lorsque le récepteur est infiniment éloigné desdites zones d'émission. Il est avantageux que la distance entre les zones d'émission et le récepteur soit supérieure à au moins dix fois la distance prédéfinie entre les zones, étant par exemple supérieure à 2 mètres.

Au moins un deuxième calcul d'angle est avantageusement réalisé avec au moins un deuxième générateur, afin de réaliser une intersection géométrique.

L'utilisation de l'angle comme grandeur géométrique rend le procédé simple, et fonctionne même à bonne distance, en supposant que les lignes d'émission des signaux sont parallèles.

Dans une variante ou en combinaison, la grandeur géométrique représentative de la position $(x_r, y_r)$ du récepteur par rapport à un générateur est la distance les séparant, fonction des distances $d_1$, $d_2$ entre la position $(x_{a1}, y_{a1}, x_{a2}, y_{a2})$ de chaque zone d'émission du générateur et la position du récepteur, définies par exemple par :

$$d_2 - d_1 = \sqrt{(x_{a2}-x_r)^2 + (y_{a2}-y_r)^2} - \sqrt{(x_{a1}-x_r)^2 + (y_{a1}-y_r)^2} = \delta\varphi$$ pour un positionnement en deux dimensions (2D).

Après développement, on peut obtenir: avec:

$$4\delta\varphi^2 d_1^{\ 2} = \left(d_2^{\ 2} - d_1^{\ 2}\right)^2 + \delta\varphi^4 - 2\delta\varphi^2\left(d_2^{\ 2} - d_1^{\ 2}\right),$$

$$d_2^{\ 2} - d_1^{\ 2} = (x_{a2}-x_r)^2 + (y_{a2}-y_r)^2 - \left[(x_{a1}-x_r)^2 + (y_{a1}-y_r)^2\right]$$
$$= \left(x_{a2}^{\ 2} - x_{a1}^{\ 2}\right) + 2(x_{a1}-x_{a2})x_r + \left(y_{a2}^{\ 2} - y_{a1}^{\ 2}\right) + 2(y_{a1}-y_{a2})y_r.$$

Et, par suite, on peut obtenir les expressions suivantes :

$$d_2^{\ 2} - d_1^{\ 2} = 2\Delta X_{12}x_r + 2\Delta Y_{12}y_r + \Delta^2 X_{21} + \Delta^2 Y_{21}$$
$$\left(d_2^{\ 2} - d_1^{\ 2}\right)^2 = 4\Delta X_{12}^{\ 2}x_r^{\ 2} + 4\Delta Y_{12}^{\ 2}y_r^{\ 2} + \left(\Delta^2 X_{21} + \Delta^2 Y_{21}\right)^2$$
$$+ 8\Delta X_{12}\Delta Y_{12}x_r y_r + 4\Delta X_{12}\left(\Delta^2 X_{21} + \Delta^2 Y_{21}\right)x_r + 4\Delta Y_{12}\left(\Delta^2 X_{21} + \Delta^2 Y_{21}\right)y_r,$$

dans lesquelles :

$$\Delta X_{12} = x_{a1} - x_{a2} \quad \text{et} \quad \Delta Y_{12} = y_{a1} - y_{a2},$$

$$\Delta^2 X_{21} = x_{a2}^{\ 2} - x_{a1}^{\ 2} \quad \text{et} \quad \Delta^2 Y_{21} = y_{a2}^{\ 2} - y_{a1}^{\ 2}.$$

On obtient la relation générale suivante, fonction des distances entre la position de chaque zone d'émission du générateur et la position du récepteur :

$$x_r{}^2\left[\delta\varphi^2 - \Delta X_{12}{}^2\right] + x_r\left[\delta\varphi^2 \Delta X_{12} - 2\delta\varphi^2 x_{a1} - \Delta X_{12}\left(\Delta^2 X_{21} + \Delta^2 Y_{21}\right)\right]$$
$$+ y_r{}^2\left[\delta\varphi^2 - \Delta Y_{12}{}^2\right] + y_r\left[\delta\varphi^2 \Delta Y_{12} - 2\delta\varphi^2 y_{a1} - \Delta Y_{12}\left(\Delta^2 X_{21} + \Delta^2 Y_{21}\right)\right]$$
$$- 2\Delta X_{12}\Delta Y_{12} x_r y_r \qquad ,$$
$$+ \delta\varphi^2\left(x_{a1}{}^2 + y_{a1}{}^2\right) + \frac{\delta\varphi^2}{2}\left(\Delta^2 X_{21} + \Delta^2 Y_{21}\right) - \frac{1}{4}\left(\Delta^2 X_{21} + \Delta^2 Y_{21}\right)^2 - \frac{\delta\varphi^4}{4}$$
$$= 0$$

dont il est possible de simplifier la forme globale comme suit :

$$A\left(x_r - x_{ref}\right)^2 + B\left(y_r - y_{ref}\right)^2 + C\, x_r y_r + D = 0\,,$$

avec A, B C et D d'une part, et $x_{ref}$ et $y_{ref}$ d'autre part, des coefficients déterminés par la géométrie du problème et la mesure de différence de phase $\delta\varphi$.

Cela revient à déterminer une hyperbole pour un positionnement en deux dimensions, ou un hyperboloïde en trois dimensions (3D) sur lequel se trouve le récepteur, les zones d'émission des générateurs étant leurs foyers.

Au moins un deuxième générateur est avantageusement utilisé pour obtenir un système d'équations et une intersection des hyperboles, pour obtenir la position ($x_r$, $y_r$) du récepteur.

L'utilisation comme grandeur géométrique de la distance séparant le récepteur d'un générateur, et l'expression sous la forme d'hyperboles, ne nécessite aucune approximation.

Il faut au moins deux générateurs pour un positionnement en deux dimensions et trois générateurs pour un positionnement en trois dimensions pour réaliser les intersections géométriques et obtenir un point unique.

La position des générateurs au sein du système de positionnement est supposée connue. Les générateurs sont de préférence statiques.

Les deux signaux émis par chaque générateur peuvent être issus d'au moins deux antennes appartenant au générateur et distantes l'une de l'autre d'une distance prédéfinie.

La distance prédéfinie dont les deux antennes d'un même générateur sont distantes l'une de l'autre est avantageusement égale à la longueur d'onde de la porteuse des signaux émis par les antennes. Cela permet d'obtenir des mesures non ambiguës au niveau du récepteur.

Les signaux émis par un même générateur sont de préférence synchronisés entre eux, par exemple en interne par le générateur.

Chaque générateur émet avantageusement sur une fréquence différente. Cela permet d'éliminer le problème du phénomène d'éblouissement ou d'interférence intrinsèque entre deux signaux émettant sur une même fréquence.

Le récepteur est avantageusement multicanal, au moins un premier canal étant configuré pour détecter le premier signal d'un générateur, et au moins un deuxième canal étant configuré pour détecter le deuxième signal du même générateur.

La combinaison des deux procédés définis ci-dessus présente un certain intérêt. Un système complet de positionnement mettant en oeuvre ces deux procédés permet, à partir des mêmes mesures de phases, d'avoir au moins trois modes de fonctionnement : un positionnement absolu en effectuant des différences, à un instant donné, entre les deux antennes d'un générateur et cela pour plusieurs générateurs, puis un positionnement relatif à partir de la position obtenue, d'une précision décimétrique, par mesures de différence de phases à des instants successifs, puis un positionnement absolu en mouvement par analyses de l'évolution de la phase des porteuses en provenance des diverses antennes à plusieurs instants successifs.

L'invention pourra être mieux comprise à la lecture de la description qui va suivre, d'exemples non limitatifs de mise en oeuvre de celle-ci, et à l'examen du dessin annexé, sur lequel :

- la figure 1 représente de façon schématique un système de positionnement, selon l'art antérieur, utilisant des pseudolites,
- la figure 2 illustre des étapes de mise en oeuvre du procédé selon l'invention,
- la figure 3 représente de façon schématique un système de positionnement dans lequel peut être mis en oeuvre le procédé selon l'invention,
- la figure 4 illustre un résultat de trajectoire d'un récepteur obtenue par la mise en oeuvre du procédé selon l'invention,
- la figure 5 représente de façon schématique un système de positionnement dans lequel peut être mis en oeuvre une variante de procédé selon l'invention,

- la figure 6 représente la géométrie mise en oeuvre dans un système de positionnement selon une variante de l'invention, et
- les figures 7 à 9 sont des courbes montrant les performances d'une variante de procédé selon l'invention.

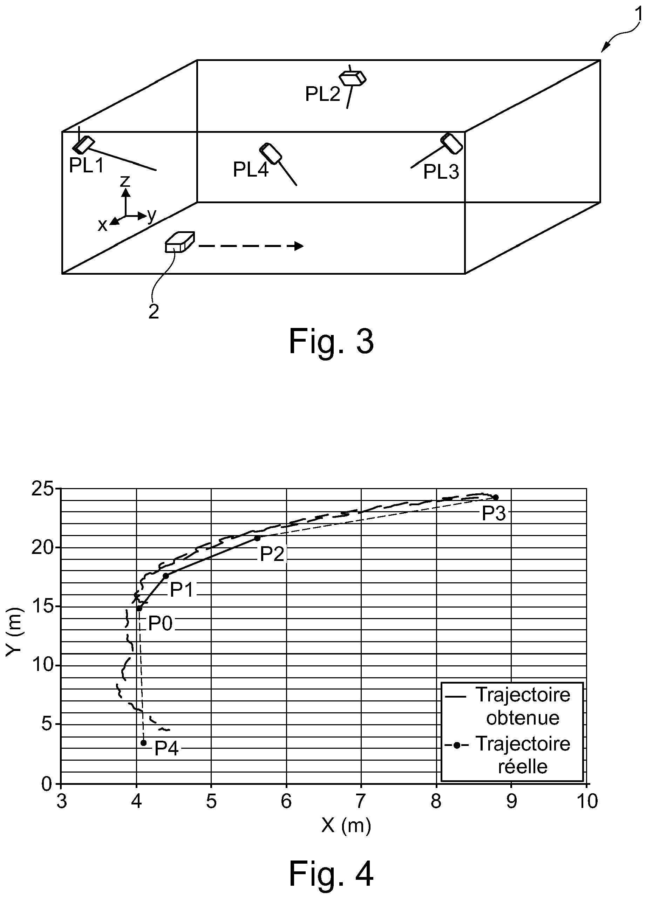

On a représenté à la figure 3 un exemple de système 1 dans lequel peut être mis en oeuvre le procédé selon l'invention, dont des étapes sont illustrées à la figure 2.

Le système 1 comprend un récepteur 2 mobile au sein du système 1 et une pluralité d'émetteurs PL1, PL2, PL3, PL4 formant une constellation locale. Comme représenté sur la figure 3, le système 1 peut être mis en oeuvre en intérieur (en *indoor*), par exemple à l'intérieur d'un bâtiment, ou à l'extérieur dans une zone très urbaine, entre des murs très hauts par exemple.

Chaque émetteur PL1, PL2, PL3, PL4 émet de préférence un signal comprenant une porteuse modulée par un code.

Les signaux émis par les émetteurs PL1, PL2, PL3, PL4 sont par exemple des signaux GNSS de fréquence égale à 1,575 GHz.

Le récepteur 2 est configuré pour détecter les signaux émis par les émetteurs. Ces derniers sont par exemple reçus par l'antenne du récepteur 2 puis amplifiés et convertis en fréquence intermédiaire FI plus basse que leur fréquence initiale.

Ces signaux sont dans l'exemple considéré échantillonnés, puis numérisés avant d'être traités par les canaux de réception du récepteur 2. Ces canaux de réception peuvent mettre en oeuvre des boucles de poursuite. Le récepteur 2 comporte avantageusement une boucle à verrouillage de phase configurée pour mesurer la phase c de la porteuse des signaux émis par les émetteurs.

Comme expliqué précédemment, et comme représenté à la figure 2, lors d'une étape 11, une position initiale estimée prédéfinie $\hat{X}$ est choisie pour le récepteur 2. Durant son déplacement au sein du système de positionnement 1, à partir de cette position initiale estimée, lors d'une étape 12, le récepteur 2 effectue des mesures successives de la phase $\phi_k$ de la porteuse du signal émis par chaque émetteur PL1, PL2, PL3, PL4, pour différentes positions ultérieures du récepteur $(x_j, y_j, z_j)$.

Lors d'une étape 13, on calcule les variations $\Delta\phi$ de la phase de la porteuse des signaux entre chaque position ultérieure du récepteur 2 pour laquelle la phase $\phi_k$ a été mesurée et la position initiale estimée du récepteur, pour chaque émetteur PL1, PL2, PL3, PL4. La matrice d$\Delta\phi$ définie précédemment est créée lors d'une étape 13bis.

Afin de calculer la variation de distance $\Delta X$ et de déterminer la position initiale réelle du récepteur 2 au sein du système de positionnement 1, la matrice H définie précédemment est créée lors d'une étape 14 et est inversée lors d'une étape 15. La variation de distance $\Delta X$ est calculée lors d'une étape 16.

La variation de distance $\Delta X$ ainsi calculée et la position initiale estimée prédéfinie $\hat{X}$ du récepteur 2 sont additionnées lors d'une étape 17 afin de former une nouvelle position initiale $\hat{X}$.

Lors d'une étape 18, la variation de distance $\Delta X$ est comparée à un deuxième seuil prédéfini $\varepsilon_2$. Si $\Delta X$ est supérieure à ce deuxième seuil prédéfini, on modifie la position initiale estimée prédéfinie $\hat{X}$ du récepteur 2, les mesures de phase et de variations $\Delta\phi$ de phase étant réitérées à partir de cette nouvelle position initiale estimée.

Si $\Delta X$ est inférieure à ce deuxième seuil prédéfini $\varepsilon_2$, on la compare à un premier seuil prédéfini $\varepsilon_1$, le procédé selon l'invention étant avantageusement réitéré, à partir de l'étape 14, tant que la variation de distance $\Delta X$ est supérieure à ce premier seuil prédéfini.

Lorsque la variation de distance $\Delta X$ est inférieure au premier seuil prédéfini $\varepsilon_1$, on vérifie, lors d'une étape 19, si la position initiale du récepteur ainsi déterminée appartient à la région couverte par le système de positionnement 1, délimitée par les positions des émetteurs.

Si la position initiale du récepteur déterminée appartient à la région couverte par le système de positionnement 1, la position initiale estimée $\hat{X}$ du récepteur 2 est retenue comme position réelle lors d'une étape 20, sinon, on réitère le procédé.

Le premier seuil prédéfini est compris entre $10^{-5}$ m et $10^{-1}$ m, étant par exemple égal à $10^{-2}$ m. Le deuxième seuil prédéfini est compris entre $10^2$ m et $10^5$ m, étant par exemple égal à $10^3$ m.

La figure 4 représente des résultats obtenus en mettant en oeuvre l'invention dans un canyon urbain en forme de U de 20 m par 30 m, formés par des immeubles hauts. Dans cet exemple, quatre émetteurs sont déployés au dernier étage des immeubles, à une altitude de 18 m environ.

Un récepteur 2 est en mouvement dans cet environnement. Le récepteur 2 a comme position initiale estimée P0, puis effectue un aller-retour entre les positions P0 et P3 en passant par les positions ultérieures P1 et P2, puis va de la position P0 à la position P4. Le procédé de localisation du récepteur 2 selon l'invention est mis en oeuvre et les positions obtenues sont comparées avec la trajectoire réelle, comme visible à la figure 4. La trajectoire reconstituée obtenue est très proche de la trajectoire réelle, connue au préalable pour les besoins de l'expérience, l'écart restant en dessous de 50 cm, comme représenté dans le tableau ci-dessous montrant l'erreur et l'erreur moyenne pour chaque position.

| Position | X(m) | Y(m) | Erreur(m) | PR(m) Erreur moyenne | EHDOP |
|----------|------|------|-----------|----------------------|-------|
| P0 | 4.04 | 14.82 | 0.44 | 0.05 | 26.7 |
| P1 | 4.39 | 17.56 | 0.43 | 0.05 | |
| P2 | 5.61 | 20.78 | 0.40 | 0.06 | |
| P3 | 8.8 | 24.15 | 0.13 | 0.28 | |
| P4 | 4.09 | 3.37 | 1.08 | 0.23 | |
| P4c | 3.72 | 4.00 | 0.73 | 0.23 | 4.2 |

Les positions P3 et P4 donnent les erreurs les plus grandes, car elles sont plus difficiles à estimer de par la configuration de la trajectoire, correspondant à un chemin multiple et des glissements de cycle cumulant des sources d'erreur. Le procédé selon l'invention a ainsi été utilisé pour corriger la position P4, en utilisant une mesure supplémentaire à une position intermédiaire entre P3 et P4, conduisant au résultat P4c dans le tableau ci-dessus, donnant une erreur plus faible.

La dernière colonne du tableau montre les résultats obtenus pour la dilution horizontale étendue de la précision, ou « *extended horizontal dilution of précision* » en anglais, valeur spécifiant l'influence de la géométrie de l'environnement sur la précision du système de positionnement, et adaptée au procédé selon l'invention, représentant ainsi l'influence de l'erreur de mesures sur la position initiale du récepteur. En considérant que les erreurs sur chaque mesure de phase sont des gaussiennes centrées en zéro, et que ces erreurs sont distribuées de manière identique pour chaque émetteur et indépendantes les unes des autres, la dilution horizontale étendue de la précision peut être calculée à partir de la formule : $\mathrm{cov}(\varepsilon_X) = (H^t H)^{-1} \sigma_{UERE}^2$, avec $\mathrm{cov}(\varepsilon_X)$ la matrice de covariance de l'erreur sur la position estimée du récepteur, et $\sigma_{UERE}^2$ la variance de l'erreur sur la mesure, ou « *User Equivalent Range Error* » en anglais. En notant $\sigma_{ij}$ les éléments de $\mathrm{cov}(\varepsilon_X)$ et Dij les éléments de $(H^t H)^{-1}$, on obtient :

$$\mathrm{EHDOP} = \sqrt{D_{11} + D_{22}} = \frac{\sqrt{\sigma_{11} + \sigma_{22}}}{\sigma_{UERE}}.$$

Une valeur de dilution horizontale étendue de la précision comprise entre 10 et 40 est considérée comme acceptable, les résultats obtenus pour les positions P0 à P4 sont donc corrects. Néanmoins, la valeur de dilution horizontale étendue de la précision obtenue pour la position P4c définie ci-dessus est excellente. Cela montre qu'il est intéressant et nécessaire d'utiliser le procédé selon l'invention au cours de l'évolution du récepteur au sein du système pour diminuer les erreurs s'accumulant le long de la trajectoire.

Comme expliqué précédemment, le nombre d'émetteurs $n_{pl}$ du système 1 est fonction de la dimension m du positionnement et du nombre de mesures $k_{pt}$ réalisées pour des positions différentes du récepteur 2:

$$m.(1 + \frac{1}{k_{pt}}) \leq n_{pl}$$

. Par exemple, pour m = 3 correspondant à un positionnement en 3D, le nombre minimum d'émetteurs $n_{pl}$ est égal à 5 si trois positions différentes sont utilisées pour faire trois mesures $k_{pt}$ : 3(1+1/3) = 4. Si seulement une mesure $k_{pt}$ est utilisé, pour avoir la position du récepteur rapidement, il faut : 3(1+1) = 6 émetteurs.

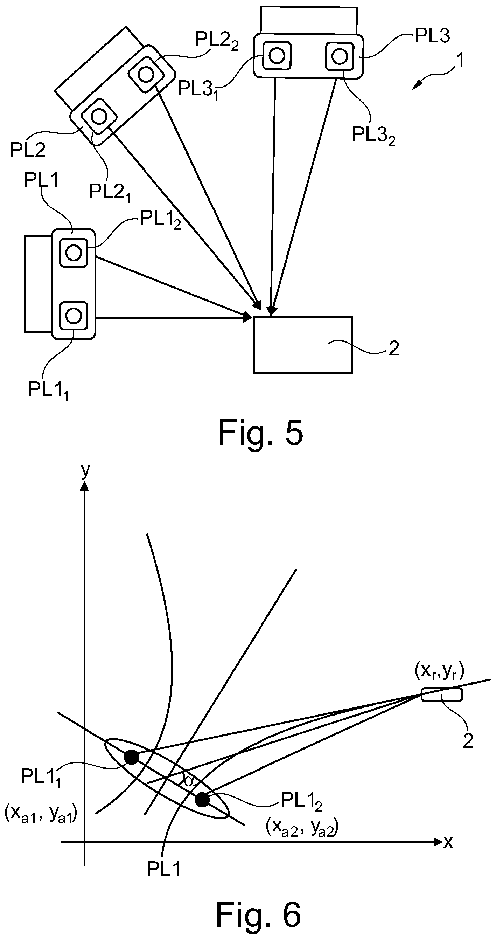

On a représenté à la figure 5 un exemple de système 1 dans lequel peut être mise en oeuvre une variante de procédé selon l'invention.

Le système 1 comprend un récepteur 2 et trois générateurs PL1, PL2, PL3 formant une constellation locale.

Chaque générateur PL1, PL2, PL3 émet, dans l'exemple décrit, sur une même porteuse, deux signaux ayant chacun un code différent. Les émetteurs peuvent être les générateurs décrits précédemment. Ces deux signaux sont émis à partir de deux zones d'émission $PL1_1$, PLh du générateur PL1 distantes l'une de l'autre d'une distance prédéfinie $d_{12}$. Dans l'exemple décrit et de préférence, les deux signaux émis par chaque générateur PL1, PL2, PL3 sont issus de deux antennes appartenant au générateur et distantes l'une de l'autre d'une distance prédéfinie égale par exemple à la longueur d'onde de la porteuse des signaux émis par les antennes.

Les signaux émis par un même générateur sont de préférence synchronisés entre eux. Chaque générateur PL1, PL2, PL3 émet de préférence sur une fréquence différente. Les signaux émis par les générateurs PL1, PL2, PL3 sont par exemple des signaux GNSS de fréquence égale à 1,575 GHz.

Le récepteur 2 est configuré pour détecter les signaux émis par les générateurs. Le récepteur 2 est avantageusement configuré pour mesurer, pour chacun des générateurs PL1, PL2, PL3, la différence de phase $\delta\varphi^j$ entre les deux signaux émis par le générateur PLj.

Comme défini précédemment, en fonction de ces mesures de différences de phase $\delta\varphi^j$, le récepteur 2 est avantageusement configuré pour calculer au moins une grandeur géométrique représentative de la position du récepteur par rapport aux générateurs PL1, PL2, PL3, afin d'obtenir sa position $(x_r, y_r)$ au sein du système 1.

Dans l'exemple de la figure 6, et comme défini précédemment, la grandeur géométrique représentative de la position $(x_r, y_r)$ du récepteur 2 par rapport à un générateur PLj est l'angle d'arrivée $\alpha_j$ des signaux émis par le générateur PLj sur le récepteur, fonction de la distance prédéfinie $d_{12}{}^j$ entre les deux zones d'émission du générateur et des mesures

$$\delta\varphi^j \; : \; \alpha_j = Arc\cos\left(\frac{\delta\varphi^j}{d_{12}{}^j}\right)$$

de différences de phase                .

Dans une variante, la grandeur géométrique représentative de la position $(x_r, y_r)$ du récepteur 2 par rapport à un générateur PLj est la distance les séparant, fonction des distances $(d_1, d_2)$ entre la position $(x_{a1}, y_{a1}, x_{a2}, y_{a2})$ de chaque zone d'émission $PLj_1$, $PLj_2$ du générateur PLj et la position $(x_r, y_r)$ du récepteur 2 :

$$d_2 - d_1 = \sqrt{\left(x_{a2} - x_r\right)^2 + \left(y_{a2} - y_r\right)^2} - \sqrt{\left(x_{a1} - x_r\right)^2 + \left(y_{a1} - y_r\right)^2} = \delta\varphi.$$

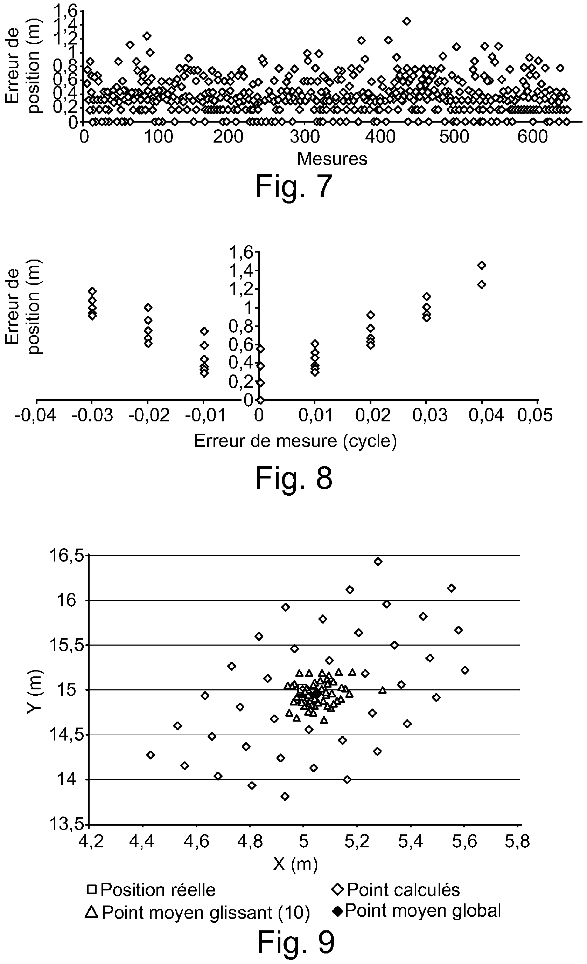

Les figures 7 à 9 représentent des résultats obtenus en mettant en oeuvre l'invention dans un hall de 20 m par 20 m, dans lequel deux générateurs PL1 et PL2 sont positionnés aux positions (0, 0) et (20, 0), étant ainsi positionnés du même côté du hall.

Le procédé selon l'invention est mis en oeuvre, comme défini précédemment, pour trouver un récepteur 2, se trouvant aux coordonnées (5; 15) du hall. Environ 660 mesures de différence de phase sont réalisées afin d'évaluer les performances du procédé selon l'invention.

La figure 7 montre la distribution des erreurs de position par mesure, correspondant à la distance entre la position du récepteur 2 calculée et sa position réelle. Selon la figure 7, la précision du positionnement semble être centrée sur une trentaine de centimètres.

La figure 8 représente la distribution des erreurs de position en fonction des erreurs de mesure de la phase des signaux.

La figure 9 montre les positions du récepteur 2 calculées selon l'invention dans le plan Oxy, le point recherché étant représenté par un carré aux coordonnées (5, 15) et les divers points calculés étant représentés par des losanges foncés. Des moyennes glissantes sur 10 points ont été réalisées, représentées par des triangles, permettant de confirmer que la précision du positionnement est de l'ordre d'une trentaine de centimètres. Le losange clair représente la moyenne générale du point obtenu sur les 650 mesures, qui se trouve être à 7,5 cm de la position réelle du récepteur 2.

L'invention n'est pas limitée aux exemples qui viennent d'être décrits.

D'autres signaux que les signaux GPS et GNSS peuvent être utilisés, par exemple des signaux Wifi, 4G, GSM ou radio.

Les procédés selon l'invention peuvent être couplés à d'autres procédés de géolocalisation, tels que des procédés utilisant un lecteur mobile, des balises et une application de géolocalisation et de guidage exécutable sur ledit lecteur.

L'invention peut être mise en oeuvre dans des lieux où sont pratiqués des sports collectifs, notamment en intérieur, par exemple en fixant ou en incorporant un système dans des cages de football ou handball afin de calculer en temps réel la position des joueurs, ou sur des chantiers de construction, par exemple pour la pose de faux plafonds, en utilisant une ou plusieurs réglettes constituées d'un réseau d'une dizaine d'antennes, ou dans des grands centres commerciaux.

L'invention peut être utilisée en extérieur, permettant de s'affranchir de station de base.

L'expression « *comportant un* » doit être comprise comme synonyme de l'expression « *comprenant au moins un* », sauf lorsque le contraire est précisé.

**Revendications**

**1.** Procédé de localisation d'au moins un récepteur (2) au sein d'un système de positionnement (1), le système comprenant :

- au moins deux émetteurs (PL1, PL2) pour un positionnement en deux dimensions et au moins trois émetteurs (PL1, PL2, PL3) pour un positionnement en trois dimensions, chaque émetteur émettant un signal comprenant une porteuse modulée par un code, la position des émetteurs au sein du système de positionnement étant supposée connue, et
- un récepteur (2) mobile au sein du système (1), configuré pour détecter les signaux émis par les émetteurs (PL1, PL2),

procédé **caractérisé en ce que** :

- durant le déplacement du récepteur (2), à partir d'une position initiale estimée prédéfinie $x_1$, $y_1$, $z_1$ de ce dernier, on effectue des mesures successives de la phase $\phi_k$ de la porteuse du signal émis par chaque émetteur (PLk), pour différentes positions ultérieures $x_j$, $y_j$, $z_j$ du récepteur (2),
- on calcule les variations de la phase $d\Delta\phi$ de la porteuse des signaux entre chaque position ultérieure $x_j$, $y_j$, $z_j$ du récepteur (2) pour laquelle la phase $\phi_k$ a été mesurée et la position initiale estimée $x_1$, $y_1$, $z_1$ du récepteur (2), pour chaque émetteur (PLk), et
- on utilise ces variations de phase $d\Delta\phi$ pour calculer une variation de distance $\Delta X$ à partir de la position initiale estimée prédéfinie $x_1$, $y_1$, $z_1$ du récepteur (2), la position initiale réelle de ce dernier au sein du système de positionnement (1) étant déterminée sur la base au moins de cette variation de distance et de la position connue desdits au moins deux émetteurs.

2. Procédé selon la revendication 1, dans lequel on calcule la variation de la phase $\phi_k^j - \phi_k^1$ de la porteuse entre une position ultérieure $x_j$, $y_j$, $z_j$ et la position initiale estimée prédéfinie $x_1$, $y_1$, $z_1$ du récepteur (2) par la relation :

$$\begin{aligned}&\sqrt{(x_j - x_{plk})^2 + (y_j - y_{plk})^2 + (z_j - z_{plk})^2}\\&- \sqrt{(x_1 - x_{plk})^2 + (y_1 - y_{plk})^2 + (z_1 - z_{plk})^2}\\&+ c.\Delta b_{1j}\\&= \phi_k^j - \phi_k^1\end{aligned},$$

avec $x_{plk}$, $y_{plk}$, $z_{plk}$ les coordonnées de l'émetteur (PLk), c la vitesse de la lumière, et $\Delta b_{1j}$ le biais d'horloge entre l'émetteur (PLk) et le récepteur (2).

3. Procédé selon l'une quelconque des revendications précédentes, dans lequel on utilise une série de Taylor du premier ordre pour calculer la variation de la phase de la porteuse :

$$-a_{x_k}^1 dx_1 - a_{y_k}^1 dy_1 + a_{x_k}^j dx_j + a_{y_k}^j dy_j + c.\,d\Delta b_{1j} = \phi_k^j - \phi_k^1 - \left(\hat{\rho}_k^j - \hat{\rho}_k^1\right),$$

avec

$$\hat{\rho}_k^u = \sqrt{(x_u - x_{plk})^2 + (y_u - y_{plk})^2 + (z - z_{plk})^2} + c.\,b(t_u),$$

$$a_{x_k}^u = -\frac{(x_{plk} - \hat{x}_u)}{\sqrt{(\hat{x}_u - x_{plk})^2 + (\hat{y}_u - y_{plk})^2 + (z - z_{plk})^2}}, \text{ et } a_{y_k}^u =$$

$$-\frac{(y_{plk} - \hat{y}_u)}{\sqrt{(\hat{x}_u - x_{plk})^2 + (\hat{y}_u - y_{plk})^2 + (z - z_{plk})^2}}.$$

4. Procédé selon la revendication 3, dans lequel un produit de matrices est utilisé pour calculer la variation de distance

$\Delta X : H. \Delta X = d\Delta\phi$, avec

$$H = \begin{bmatrix} -A_1 & A_2 & 0 & 0 & \cdots & \cdots & 0 \\ -A_1 & 0 & A_3 & 0 & \ddots & \cdots & \vdots \\ \vdots & \vdots & \ddots & \ddots & \ddots & \ddots & 0 \\ -A_1 & 0 & \cdots & 0 & A_i & 0 & \vdots \\ \vdots & \vdots & \ddots & \ddots & \ddots & \ddots & 0 \\ -A_1 & 0 & \cdots & 0 & \cdots & 0 & A_{k_{pt}} \end{bmatrix},$$

$$A_1 = \begin{bmatrix} a^1_{x_1} & a^1_{y_1} \\ \vdots & \vdots \\ a^1_{x_{n_{pl}}} & a^1_{y_{n_{pl}}} \end{bmatrix} \text{ pour } j = 1, \ A_j = \begin{bmatrix} a^j_{x_1} & a^j_{y_1} & 1 \\ \vdots & \vdots & \vdots \\ a^j_{x_{n_{pl}}} & a^j_{y_{n_{pl}}} & 1 \end{bmatrix}$$

pour $j > 1$, et

$$\Delta X = \begin{bmatrix} dx_1 \\ dy_1 \\ dx_2 \\ dy_2 \\ c.\, d\Delta b_{12} \\ \vdots \\ dx_i \\ dy_i \\ c.\, d\Delta b_{1i} \\ \vdots \\ dx_{k_{pt}} \\ dy_{k_{pt}} \\ c.\, d\Delta b_{1k_{pt}} \end{bmatrix}, \ d\Delta\phi = \begin{bmatrix} \phi^2_1 - \phi^1_1 - (\hat{\rho}^2_1 - \hat{\rho}^1_1) \\ \vdots \\ \phi^2_{n_{pl}} - \phi^1_{n_{pl}} - \left(\hat{\rho}^2_{n_{pl}} - \hat{\rho}^1_{n_{pl}}\right) \\ \phi^3_1 - \phi^1_1 - (\hat{\rho}^3_1 - \hat{\rho}^1_1) \\ \vdots \\ \phi^3_{n_{pl}} - \phi^1_{n_{pl}} - \left(\hat{\rho}^3_{n_{pl}} - \hat{\rho}^1_{n_{pl}}\right) \\ \vdots \\ \vdots \\ \phi^{k_{pt}}_1 - \phi^1_1 - \left(\hat{\rho}^{k_{pt}}_1 - \hat{\rho}^1_1\right) \\ \vdots \\ \phi^{k_{pt}}_{n_{pl}} - \phi^1_{n_{pl}} - \left(\hat{\rho}^{k_{pt}}_{n_{pl}} - \hat{\rho}^1_{n_{pl}}\right) \end{bmatrix},$$

la matrice H étant de préférence inversée pour obtenir la matrice de variations de distance : $\Delta X = d\Delta\phi. \ H^{-1}$.

**5.** Procédé selon l'une quelconque des revendications précédentes, étant réitéré tant que la variation de distance $\Delta X$ est supérieure à un premier seuil prédéfini ($\varepsilon_1$).

**6.** Procédé selon l'une quelconque des revendications précédentes, comportant en outre une étape dans laquelle, si la variation de distance $\Delta X$ est supérieure à un deuxième seuil prédéfini ($\varepsilon_2$), on modifie la position initiale estimée prédéfinie du récepteur (2), les mesures de phase étant notamment réitérées à partir de cette nouvelle position initiale estimée.

**7.** Procédé selon la revendication 5, dans lequel, lorsque la variation de distance $\Delta X$ est inférieure au premier seuil prédéfini ($\varepsilon_1$), on vérifie si la position initiale du récepteur (2) ainsi déterminée appartient à la région couverte par le système de positionnement (1), délimitée par les positions des émetteurs (PLk).

**8.** Procédé selon la revendication précédente, dans lequel, si la position initiale du récepteur (2) déterminée appartient à la région couverte par le système de positionnement (1), la position initiale estimée du récepteur (2) est retenue comme position réelle, sinon, on réitère le procédé.

**9.** Procédé selon l'une quelconque des revendications précédentes, dans lequel le nombre d'émetteurs $n_{pl}$ est fonction de la dimension m du positionnement et du nombre de mesures $k_{pt}$ réalisées pour des positions différentes du récepteur (2) :

$$m.(1 + \frac{1}{k_{pt}}) \leq n_{pl} \, .$$

**10.** Procédé selon l'une quelconque des revendications précédentes, dans lequel la fréquence des signaux émis par les émetteurs (PLk) est égale à 1,575 GHz, les signaux étant notamment de type GNSS Galileo.

**11.** Procédé selon l'une quelconque des revendications précédentes, étant mis en oeuvre en intérieur.

**12.** Récepteur (2), destiné à être utilisé au sein d'un système (1) de positionnement comprenant au moins deux émetteurs (PL1, PL2) pour un positionnement en deux dimensions et au moins trois émetteurs (PL1, PL2, PL3) pour un positionnement en trois dimensions, chaque émetteur émettant un signal comprenant une porteuse modulée par un code, la position des émetteurs au sein du système de positionnement étant supposée connue, le récepteur (2) étant mobile au sein du système (1) et configuré pour détecter les signaux émis par les émetteurs (PL1, PL2), le récepteur (2) étant **caractérisé en ce qu'**il est configuré pour :

- durant son déplacement au sein du système (1), à partir d'une position initiale estimée prédéfinie $x_1$, $y_1$, $z_1$, effectuer des mesures successives de la phase $\phi_k$ de la porteuse du signal émis par chaque émetteur (PLk), pour différentes positions ultérieures $x_j$, $y_j$, $z_j$ du récepteur (2),
- calculer les variations de la phase $d\Delta\phi$ de la porteuse des signaux entre chaque position ultérieure $x_j$, $y_j$, $z_j$ du récepteur (2) pour laquelle la phase $\phi_k$ a été mesurée et la position initiale estimée $x_1$, $y_1$, $z_1$ du récepteur (2), pour chaque émetteur (PLk), et
- utiliser ces variations de phase $d\Delta\phi$ pour calculer une variation de distance $\Delta X$ à partir de la position initiale estimée prédéfinie $x_1$, $y_1$, $z_1$ du récepteur (2), la position initiale réelle de ce dernier au sein du système de positionnement (1) étant déterminée sur la base au moins de cette variation de distance et de la position connue desdits au moins deux émetteurs.

**13.** Récepteur selon la revendication précédente, comportant une boucle à verrouillage de phase configurée pour mesurer la phase $\phi_k$ de la porteuse des signaux émis par les émetteurs (PL1, PL2).

**14.** Système (1) de positionnement, comportant :

- au moins deux émetteurs (PL1, PL2), chaque émetteur émettant un signal comprenant une porteuse modulée par un code, et
- un récepteur (2) selon la revendication 12.

**Patentansprüche**

**1.** Verfahren zur Lokalisierung mindestens eines Empfängers (2) innerhalb eines Positionierungssystems (1), wobei das System umfasst:

- mindestens zwei Sender (PL1, PL2) für eine Positionierung in zwei Dimensionen und mindestens drei Sender (PL1, PL2, PL3) für eine Positionierung in drei Dimensionen, wobei jeder Sender ein Signal sendet, das einen mit einem Code modulierten Träger umfasst, wobei die Position der Sender innerhalb des Positionierungssystems als bekannt vorausgesetzt wird, und
- einen innerhalb des Systems (1) beweglichen Empfänger (2), der dafür ausgelegt ist, die von den Sendern (PL1, PL2) gesendeten Signale zu detektieren, wobei das Verfahren **dadurch gekennzeichnet ist, dass**:
- während der Bewegung des Empfängers (2), ausgehend von einer vordefinierten geschätzten Anfangsposition $x_1$, $y_1$, $z_1$ dieses Letzteren, aufeinander folgende Messungen der Phase $\Phi_k$ des Trägers des von jedem Sender (PLk) gesendeten Signals für verschiedene spätere Positionen $x_j$, $y_j$, $z_j$ des Empfängers (2) ausgeführt werden,
- die Änderungen der Phase $d\Delta\Phi$ des Trägers der Signale zwischen jeder späteren Position $x_j$, $y_j$, $z_j$ des Empfängers (2), für welche die Phase $\Phi_k$ gemessen worden ist, und der geschätzten Anfangsposition $x_1$, $y_1$, $z_1$ des Empfängers (2) berechnet werden, für jeden Sender (PLk), und
- diese Phasenänderungen $d\Delta\Phi$ verwendet werden, um eine Entfernungsänderung $\Delta X$ ausgehend von der vordefinierten geschätzten Anfangsposition $x_1$, $y_1$, $z_1$ des Empfängers (2) zu berechnen, wobei die tatsächliche Anfangsposition dieses Letzteren innerhalb des Positionierungssystems (1) auf der Basis mindestens dieser Entfernungsänderung und der bekannten Position der mindestens zwei Sender bestimmt wird.

2.  Verfahren nach Anspruch 1, wobei die Änderung der Phase $\Phi_k^j - \Phi_k^1$ des Trägers zwischen einer späteren Position $x_j$, $y_j$, $z_j$ und der vordefinierten geschätzten Anfangsposition $x_1$, $y_1$, $z_1$ des Empfängers (2) durch die Beziehung berechnet wird:

$$\sqrt{(x_j - x_{plk})^2 + (y_j - y_{plk})^2 + (z_j - z_{plk})^2}$$
$$- \sqrt{(x_1 - x_{plk})^2 + (y_1 - y_{plk})^2 + (z_1 - z_{plk})^2}$$
$$+ c.\Delta b_{1j} \quad ,$$
$$= \phi_k^j - \phi_k^1$$

wobei $x_{plk}$, $y_{plk}$, $z_{plk}$ die Koordinaten des Senders (PLk) sind, c die Lichtgeschwindigkeit ist und $\Delta b_{1j}$ der Taktversatz zwischen dem Sender (PLk) und dem Empfänger (2) ist.

3.  Verfahren nach einem der vorhergehenden Ansprüche, wobei eine Taylorreihe erster Ordnung verwendet wird, um die Änderung der Phase des Trägers zu berechnen:

$$-a_{x_k}^1 dx_1 - a_{y_k}^1 dy_1 + a_{x_k}^j dx_j + a_{y_k}^j dy_j + c.\,d\Delta b_{1j} = \phi_k^j - \phi_k^1 - (\hat{\rho}_k^j - \hat{\rho}_k^1),$$

mit

$$\hat{\rho}_k^u = \sqrt{(x_u - x_{plk})^2 + (y_u - y_{plk})^2 + (z - z_{plk})^2} + c.\,b(t_u),$$

$$a_{x_k}^u = -\frac{(x_{plk} - \hat{x}_u)}{\sqrt{(\hat{x}_u - x_{plk})^2 + (\hat{y}_u - y_{plk})^2 + (z - z_{plk})^2}}, \text{ für } a_{y_k}^u =$$

$$-\frac{(y_{plk} - \hat{y}_u)}{\sqrt{(\hat{x}_u - x_{plk})^2 + (\hat{y}_u - y_{plk})^2 + (z - z_{plk})^2}}.$$

4.  Verfahren nach Anspruch 3, wobei ein Matrixprodukt verwendet wird, um die Entfernungsänderung $\Delta X$ zu berechnen: $H.\Delta X = d\Delta\phi$, mit

$$H = \begin{bmatrix} -A_1 & A_2 & 0 & 0 & \cdots & \cdots & 0 \\ -A_1 & 0 & A_3 & 0 & \ddots & \cdots & \vdots \\ \vdots & \vdots & \ddots & \ddots & \ddots & \ddots & 0 \\ -A_1 & 0 & \cdots & 0 & A_i & 0 & \vdots \\ \vdots & \vdots & \ddots & \ddots & \ddots & \ddots & 0 \\ -A_1 & 0 & \cdots & 0 & \cdots & 0 & A_{k_{pt}} \end{bmatrix},$$

$$A_1 = \begin{bmatrix} a_{x_1}^1 & a_{y_1}^1 \\ \vdots & \vdots \\ a_{x_{n_{pl}}}^1 & a_{y_{n_{pl}}}^1 \end{bmatrix} \text{ für } j = 1, \; A_j = \begin{bmatrix} a_{x_1}^j & a_{y_1}^j & 1 \\ \vdots & \vdots & \vdots \\ a_{x_{n_{pl}}}^j & a_{y_{n_{pl}}}^j & 1 \end{bmatrix}$$

für j > 1, und

$$\Delta X = \begin{bmatrix} dx_1 \\ dy_1 \\ dx_2 \\ dy_2 \\ c.d\Delta b_{12} \\ \vdots \\ dx_i \\ dy_i \\ c.d\Delta b_{1i} \\ \vdots \\ dx_{k_{pt}} \\ dy_{k_{pt}} \\ c.d\Delta b_{1k_{pt}} \end{bmatrix}, \; d\Delta\phi = \begin{bmatrix} \phi_1^2 - \phi_1^1 - (\hat{\rho}_1^2 - \hat{\rho}_1^1) \\ \vdots \\ \phi_{n_{pl}}^2 - \phi_{n_{pl}}^1 - \left(\hat{\rho}_{n_{pl}}^2 - \hat{\rho}_{n_{pl}}^1\right) \\ \phi_1^3 - \phi_1^1 - (\hat{\rho}_1^3 - \hat{\rho}_1^1) \\ \vdots \\ \phi_{n_{pl}}^3 - \phi_{n_{pl}}^1 - \left(\hat{\rho}_{n_{pl}}^3 - \hat{\rho}_{n_{pl}}^1\right) \\ \vdots \\ \vdots \\ \phi_1^{k_{pt}} - \phi_1^1 - \left(\hat{\rho}_1^{k_{pt}} - \hat{\rho}_1^1\right) \\ \vdots \\ \phi_{n_{pl}}^{k_{pt}} - \phi_{n_{pl}}^1 - \left(\hat{\rho}_{n_{pl}}^{k_{pt}} - \hat{\rho}_{n_{pl}}^1\right) \end{bmatrix},$$

wobei die Matrix H vorzugsweise invertiert wird, um die Matrix der Entfernungsänderungen zu erhalten:

$$\Delta X = d\Delta\Phi.H^{-1}.$$

**5.** Verfahren nach einem der vorhergehenden Ansprüche, welches reiteriert wird, solange die Entfernungsänderung $\Delta X$ größer als ein erster vordefinierter Schwellenwert ($\varepsilon_1$) ist.

**6.** Verfahren nach einem der vorhergehenden Ansprüche, welches außerdem einen Schritt umfasst, in dem, falls die Entfernungsänderung $\Delta X$ größer als ein zweiter vordefinierter Schwellenwert ($\varepsilon_2$) ist, die vordefinierte geschätzte Anfangsposition des Empfängers (2) geändert wird, wobei die Phasenmessungen insbesondere ausgehend von dieser neuen geschätzten Anfangsposition reiteriert werden.

**7.** Verfahren nach Anspruch 5, wobei, wenn die Entfernungsänderung $\Delta X$ kleiner als der erste vordefinierte Schwellenwert ($\varepsilon_1$) ist, überprüft wird, ob die so bestimmte Anfangsposition des Empfängers (2) dem von dem Positionierungssystem (1) abgedeckten Bereich angehört, der durch die Positionen der Sender (PLk) begrenzt wird.

**8.** Verfahren nach dem vorhergehenden Anspruch, wobei, falls die bestimmte Anfangsposition des Empfängers (2) dem von dem Positionierungssystem (1) abgedeckten Bereich angehört, die geschätzte Anfangsposition des Empfängers (2) als tatsächliche Position beibehalten wird und andernfalls das Verfahren reiteriert wird.

**9.** Verfahren nach einem der vorhergehenden Ansprüche, wobei die Anzahl der Sender $n_{pl}$ von der Dimension m der Positionierung und von der Anzahl der Messungen $k_{pt}$, die für verschiedene Positionen des Empfängers (2) ausgeführt werden, abhängig ist:

$$m.(1 + \frac{1}{k_{pt}}) \leq n_{pl} \,.$$

**10.** Verfahren nach einem der vorhergehenden Ansprüche, wobei die Frequenz der von den Sendern (PLk) gesendeten Signale gleich 1,575 GHz ist, wobei die Signale insbesondere vom Typ GNSS Galileo sind.

**11.** Verfahren nach einem der vorhergehenden Ansprüche, welches im Innenbereich durchgeführt wird.

**12.** Empfänger (2), der dazu bestimmt ist, innerhalb eines Positionierungssystems (1) verwendet zu werden, das mindestens zwei Sender (PL1, PL2) für eine Positionierung in zwei Dimensionen und mindestens drei Sender (PL1, PL2, PL3) für eine Positionierung in drei Dimensionen umfasst, wobei jeder Sender ein Signal sendet, das einen mit einem Code modulierten Träger umfasst, wobei die Position der Sender innerhalb des Positionierungssystems als bekannt vorausgesetzt wird, wobei der Empfänger (2) innerhalb des Systems (1) beweglich ist und dafür ausgelegt ist, die von den Sendern (PL1, PL2) gesendeten Signale zu detektieren,
wobei der Empfänger (2) **dadurch gekennzeichnet ist, dass** er dafür ausgelegt ist:

- während seiner Bewegung innerhalb des Systems (1), ausgehend von einer vordefinierten geschätzten Anfangsposition $x_1$, $y_1$, $z_1$, aufeinander folgende Messungen der Phase $\Phi_k$ des Trägers des von jedem Sender (PLk) gesendeten Signals für verschiedene spätere Positionen $x_j$, $y_j$, $z_j$ des Empfängers (2) auszuführen,
- die Änderungen der Phase d$\Delta\Phi$ des Trägers der Signale zwischen jeder späteren Position $x_j$, $y_j$, $z_j$ des Empfängers (2), für welche die Phase $\Phi_k$ gemessen worden ist, und der geschätzten Anfangsposition $x_1$, $y_1$, $z_1$ des Empfängers (2) zu berechnen, für jeden Sender (PLk), und
- diese Phasenänderungen d$\Delta\Phi$ zu verwenden, um eine Entfernungsänderung $\Delta X$ ausgehend von der vordefinierten geschätzten Anfangsposition $x_1$, $y_1$, $z_1$ des Empfängers (2) zu berechnen, wobei die tatsächliche Anfangsposition dieses Letzteren innerhalb des Positionierungssystems (1) auf der Basis mindestens dieser Entfernungsänderung und der bekannten Position der mindestens zwei Sender bestimmt wird.

**13.** Empfänger nach dem vorhergehenden Anspruch, welcher ein Phasenregelschleife aufweist, die dafür ausgelegt ist, die Phase $\Phi_k$ des Trägers der von den Sendern (PL1, PL2) gesendeten Signale zu messen.

**14.** Positionierungssystem (1), welches aufweist:

- mindestens zwei Sender (PL1, PL2), wobei jeder Sender ein Signal sendet, das einen mit einem Code modulierten Träger umfasst, und
- einen Empfänger (2) nach Anspruch 12.

**Claims**

**1.** Method for locating at least one receiver (2) within a positioning system (1), the system comprising:

- at least two emitters (PL1, PL2) for two-dimensional positioning and at least three emitters (PL1, PL2, PL3) for three-dimensional positioning, each emitter emitting a signal comprising a code-modulated carrier, the position of the emitters within the positioning system being assumed to be known, and
- a receiver (2) able to move within the system (1) and configured to detect the signals emitted by the emitters (PL1, PL2),

the method being **characterized by**:

- during the movement of the receiver (2), based on a predefined estimated initial position $x_1$, $y_1$, $z_1$ thereof, carrying out successive measurements of the phase $\Phi_k$ of the carrier of the signal emitted by each emitter (PLk), for various subsequent positions $x_j$, $y_j$, $z_j$ of the receiver (2),
- calculating the variations in the phase d$\Delta\phi$ of the carrier of the signals between each subsequent position $x_j$, $y_j$, $z_j$ of the receiver (2) for which the phase $\Phi_k$ was measured and the estimated initial position $x_1$, $y_1$, $z_1$ of the receiver (2), for each emitter (PLk), and
- using these phase variations d$\Delta\phi$ to calculate a distance variation $\Delta X$ based on the predefined estimated initial

position $x_1$, $y_1$, $z_1$ of the receiver (2), the real initial position thereof within the positioning system (1) being determined on the basis at least of this distance variation and the known position of said at least two emitters.

2. Method according to Claim 1, comprising calculating the variation in the phase $\Phi_k^j - \Phi_k^1$ of the carrier between a subsequent position $x_j$, $y_j$, $z_j$ and the predefined estimated initial position $x_1$, $y_1$, $z_1$ of the receiver (2) using the relationship:

$$\sqrt{(x_j - x_{plk})^2 + (y_j - y_{plk})^2 + (z_j - z_{plk})^2}$$
$$-\sqrt{(x_1 - x_{plk})^2 + (y_1 - y_{plk})^2 + (z_1 - z_{plk})^2}$$
$$+ c.\Delta b_{1j}$$
$$= \phi_k^j - \phi_k^1$$

where $x_{plk}$, $y_{plk}$ and $z_{plk}$ are the coordinates of the emitter (PLk), c is the speed of light, and $\Delta b_{1j}$ is the clock bias between the emitter (PLk) and the receiver (2).

3. Method according to either one of the preceding claims, wherein a first-order Taylor series is used to calculate the variation in the phase of the carrier:

$$-a_{x_k}^1 dx_1 - a_{y_k}^1 dy_1 + a_{x_k}^j dx_j + a_{y_k}^j dy_j + c.d\Delta b_{1j} = \phi_k^j - \phi_k^1 - (\hat{\rho}_k^j - \hat{\rho}_k^1),$$

with

$$\hat{\rho}_k^u = \sqrt{(x_u - x_{plk})^2 + (y_u - y_{plk})^2 + (z - z_{plk})^2} + c.b(t_u),$$

$$a_{x_k}^u = -\frac{(x_{plk} - \hat{x}_u)}{\sqrt{(\hat{x}_u - x_{plk})^2 + (\hat{y}_u - y_{plk})^2 + (z - z_{plk})^2}}, \text{ and } a_{y_k}^u =$$

$$-\frac{(y_{plk} - \hat{y}_u)}{\sqrt{(\hat{x}_u - x_{plk})^2 + (\hat{y}_u - y_{plk})^2 + (z - z_{plk})^2}}.$$

4. Method according to Claim 3, wherein a matrix product is used to calculate the distance variation $\Delta X$:

$$H.\Delta X = d\Delta\Phi,$$

$$\Delta X = \begin{bmatrix} dx_1 \\ dy_1 \\ dx_2 \\ dy_2 \\ c.\,d\Delta b_{12} \\ \vdots \\ dx_i \\ dy_i \\ c.\,d\Delta b_{1i} \\ \vdots \\ dx_{k_{pt}} \\ dy_{k_{pt}} \\ c.\,d\Delta b_{1k_{pt}} \end{bmatrix}, d\Delta\phi = \begin{bmatrix} \phi_1^2 - \phi_1^1 - (\hat{\rho}_1^2 - \hat{\rho}_1^1) \\ \vdots \\ \phi_{n_{pl}}^2 - \phi_{n_{pl}}^1 - \left(\hat{\rho}_{n_{pl}}^2 - \hat{\rho}_{n_{pl}}^1\right) \\ \phi_1^3 - \phi_1^1 - (\hat{\rho}_1^3 - \hat{\rho}_1^1) \\ \vdots \\ \phi_{n_{pl}}^3 - \phi_{n_{pl}}^1 - \left(\hat{\rho}_{n_{pl}}^3 - \hat{\rho}_{n_{pl}}^1\right) \\ \vdots \\ \vdots \\ \phi_1^{k_{pt}} - \phi_1^1 - \left(\hat{\rho}_1^{k_{pt}} - \hat{\rho}_1^1\right) \\ \vdots \\ \phi_{n_{pl}}^{k_{pt}} - \phi_{n_{pl}}^1 - \left(\hat{\rho}_{n_{pl}}^{k_{pt}} - \hat{\rho}_{n_{pl}}^1\right) \end{bmatrix},$$

with

$$H = \begin{bmatrix} -A_1 & A_2 & 0 & 0 & \cdots & \cdots & 0 \\ -A_1 & 0 & A_3 & 0 & \ddots & \cdots & \vdots \\ \vdots & \vdots & \ddots & \ddots & \ddots & \ddots & 0 \\ -A_1 & 0 & \cdots & 0 & A_i & 0 & \vdots \\ \vdots & \vdots & \ddots & \ddots & \ddots & \ddots & 0 \\ -A_1 & 0 & \cdots & 0 & \cdots & 0 & A_{k_{pt}} \end{bmatrix},$$

$$A_1 = \begin{bmatrix} a_{x_1}^1 & a_{y_1}^1 \\ \vdots & \vdots \\ a_{x_{n_{pl}}}^1 & a_{y_{n_{pl}}}^1 \end{bmatrix} \text{ for } j = 1, \quad A_j = \begin{bmatrix} a_{x_1}^j & a_{y_1}^j & 1 \\ \vdots & \vdots & \vdots \\ a_{x_{n_{pl}}}^j & a_{y_{n_{pl}}}^j & 1 \end{bmatrix}$$

for j > 1, and

$$\Delta X = \begin{bmatrix} dx_1 \\ dy_1 \\ dx_2 \\ dy_2 \\ c.d\Delta b_{12} \\ \vdots \\ dx_i \\ dy_i \\ c.d\Delta b_{1i} \\ \vdots \\ dx_{k_{pt}} \\ dy_{k_{pt}} \\ c.d\Delta b_{1k_{pt}} \end{bmatrix}, d\Delta\phi = \begin{bmatrix} \phi_1^2 - \phi_1^1 - (\hat{\rho}_1^2 - \hat{\rho}_1^1) \\ \vdots \\ \phi_{n_{pl}}^2 - \phi_{n_{pl}}^1 - \left(\hat{\rho}_{n_{pl}}^2 - \hat{\rho}_{n_{pl}}^1\right) \\ \phi_1^3 - \phi_1^1 - (\hat{\rho}_1^3 - \hat{\rho}_1^1) \\ \vdots \\ \phi_{n_{pl}}^3 - \phi_{n_{pl}}^1 - \left(\hat{\rho}_{n_{pl}}^3 - \hat{\rho}_{n_{pl}}^1\right) \\ \vdots \\ \vdots \\ \phi_1^{k_{pt}} - \phi_1^1 - \left(\hat{\rho}_1^{k_{pt}} - \hat{\rho}_1^1\right) \\ \vdots \\ \phi_{n_{pl}}^{k_{pt}} - \phi_{n_{pl}}^1 - \left(\hat{\rho}_{n_{pl}}^{k_{pt}} - \hat{\rho}_{n_{pl}}^1\right) \end{bmatrix},$$

the matrix H preferably being inverted in order to obtain the distance variation matrix:

$$\Delta X = d\Delta\Phi . H^{-1}.$$

5. Method according to any one of the preceding claims, being reiterated for as long as the distance variation $\Delta X$ is greater than a first predefined threshold ($\varepsilon_1$).

6. Method according to any one of the preceding claims, furthermore comprising a step, if the distance variation $\Delta X$ is greater than a second predefined threshold ($\varepsilon_2$), of modifying the predefined estimated initial position of the receiver (2), the phase measurements in particular being reiterated based on this new estimated initial position.

7. Method according to Claim 5, wherein, when the distance variation $\Delta X$ is less than the first predefined threshold ($\varepsilon_1$), it is checked whether the initial position of the receiver (2) thus determined belongs to the region covered by the positioning system (1), delimited by the positions of the emitters (PLk).

8. Method according to the preceding claim, wherein, if the determined initial position of the receiver (2) belongs to the region covered by the positioning system (1), the estimated initial position of the receiver (2) is selected as real position, otherwise the method is reiterated.

9. Method according to any one of the preceding claims, wherein the number of emitters $n_{pl}$ depends on the dimension m of the positioning and on the number of measurements $k_{pt}$ carried out for different positions of the receiver (2):

$$m.(1+\frac{1}{k_{pt}}) \le n_{pl}.$$

10. Method according to any one of the preceding claims, wherein the frequency of the signals emitted by the emitters (PLk) is equal to 1.575 GHz, the signals in particular being GNSS Galileo signals.

11. Method according to any one of the preceding claims, being implemented indoors.

12. Receiver (2), intended to be used within a positioning system (1) comprising at least two emitters (PL1, PL2) for two-dimensional positioning and at least three emitters (PL1, PL2, PL3) for three-dimensional positioning, each emitter emitting a signal comprising a code-modulated carrier, the position of the emitters within the positioning system being assumed to be known, the receiver (2) being able to move within the system (1) and configured to detect the signals emitted by the emitters (PL1, PL2),

the receiver (2) being **characterized in that** it is configured to:

- during movement thereof within the system (1), based on a predefined estimated initial position $x_1$, $y_1$, $z_1$, carry out successive measurements of the phase $\Phi_k$ of the carrier of the signal emitted by each emitter (PLk), for various subsequent positions $x_j$, $y_j$, $z_j$ of the receiver (2) ,
- calculate the variations in the phase $d\Delta\phi$ of the carrier of the signals between each subsequent position $x_j$, $y_j$, $z_j$ of the receiver (2) for which the phase $\Phi_k$ was measured and the estimated initial position $x_1$, $y_1$, $z_1$ of the receiver (2), for each emitter (PLk), and
- use these phase variations $d\Delta\phi$ to calculate a distance variation $\Delta X$ based on the predefined estimated initial position $x_1$, $y_1$, $z_1$ of the receiver (2), the real initial position thereof within the positioning system (1) being determined on the basis at least of this distance variation and the known position of said at least two emitters.

13. Receiver according to the preceding claim, comprising a phase-locked loop configured to measure the phase $\Phi_k$ of the carrier of the signals emitted by the emitters (PL1, PL2).

14. Positioning system (1), comprising:

- at least two emitters (PL1, PL2), each emitter emitting a signal comprising a code-modulated carrier, and
- a receiver (2) according to Claim 12.

Fig. 1

Fig. 2

Fig. 3

Fig. 4

PL2₂

PL3

PL3₁

1

PL2

PL2₁

PL3₂

PL1

PL1₂

PL1₁

2

## Fig. 5

y

(x_r, y_r)

2

PL1₁

(x_a1, y_a1)

α

PL1₂

(x_a2, y_a2)

PL1

x

## Fig. 6

Fig. 7

Fig. 8

□ Position réelle   ◇ Point calculés
△ Point moyen glissant (10)   ◆ Point moyen global

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5899957 A
- US 4646096 A
- US 7212155 B
- US 7671794 B
- US 6549165 B

- WO 2014060777 A
- US 20070052583 A
- US 20020145563 A
- US 20090322603 A

**Littérature non-brevet citée dans la description**

- **MAGDA CHELLY ; NEL SAMAMA.** WiFi Indoor Symbolic Positioning System Implemented On a PDA. *GNSS,* 2007
- **KEE C. et al.** Centimeter-Accuracy Indoor Navigation Using GPS-Like Pseudolites. *GPS World,* 2001, 14-20
- **KAPLAN E. ; HEGARTY C.** Understanding GPS Principles and Applications. Artech House, 2006
- **FLUERASU A. et al.** Multipath modélisation of typical indoor environments optimisation of GNSS based indoor positioning''. *ENC-GNSS,* 2008
- **JARDAK N. ; SAMAMA N.** Short Multipath Insensitive Code Loop Discriminator. *IEEE Transactions on Aerospace and Electronic Systems,* 2010, vol. 46, 278-295
- **VERVISCH-PICOIS A. et al.** 2D Indoor Dynamic Positioning Using GNSS Based Repeaters. *ION GNSS,* 2006
- **JEE G. I. et al.** Indoor Positioning Using Time Synchronised Switching GPS Repeater. *ION GNSS,* 2005
- **RIZOS C. et al.** LocataNet: Intelligent Time-Synchronised Pseudolite Transceivers for cm-Level Stand-Alone Positioning. *IAIN World Congress,* 2003
- **I. SELMI et al.** Experimental Positioning Results of the Repealite Based Indoor Positioning System. *IEEE International Conférence on Indoor Positioning and Indoor Navigation,* 2012

- **KEE C. et al.** Development of indoor Navigation System using asynchronous pseudolites. *ION GPS,* 2000
- **XIAOGUANG WAN et al.** The Pseudolite-based Indoor Navigation System Using Ambiguity Resolution On The Fly. *IEEE 3rd International Symposium on Systems and Control in Aeronautic and Astronautics,* 2010, 212-217
- **PUENGNIM A. et al.** Précisé Positioning for Virtually Synchronized Pseudolite System. *IEEE International Conférence on Indoor Positioning and Indoor Navigation,* 2013, 1-8
- **PETROVSKI I. et al.** Précisé Navigation Indoor. *IEEE SICE Annual Conférence,* 2004, vol. 2, 1739-1744
- **KAO WEI-WEN ; TSAI CHIN-LANG.** Carrier Phase Indoor Positioning using Pseudolites And INS. *ION GNSS,* 2003
- **SCHELKSHOM S. ; DETLEFSEN J.** Indoor Navigation Based On Doppler Measurements. *IEEE Workshop on Positioning, Navigation and Communication,* 2007, 37-40
- **SAKAMOTO Y. et al.** Doppler Positioning with a Movable Receiver Antenna and a Single Pseudolite for Indoor Localization. *IEEE/ASME International Conférence on Advanced Intelligent Mechatronics,* 2011, 19-24